(19) Europäisches Patentamt
European Patent Office
Office européen des brevets

(11) **EP 4 213 072 A1**

(12) **EUROPÄISCHE PATENTANMELDUNG**

(43) Veröffentlichungstag:
**19.07.2023   Patentblatt 2023/29**

(21) Anmeldenummer: **22151571.1**

(22) Anmeldetag: **14.01.2022**

(51) Internationale Patentklassifikation (IPC):
**G06N 3/04** (2023.01)          **G06N 3/08** (2023.01)
**G06N 20/00** (2019.01)          **G06F 21/16** (2013.01)

(52) Gemeinsame Patentklassifikation (CPC):
**G06N 3/04**; G06F 21/16; G06N 3/08; G06N 20/00

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **Tokic, Michel
  88069 Tettnang (DE)**
• **von Beuningen, Anja
  99085 Erfurt (DE)**
• **Scharinger, Boris
  90762 Fürth (DE)**

(74) Vertreter: **Siemens Patent Attorneys
Postfach 22 16 34
80506 München (DE)**

(54) **VERFAHREN ZUM DIEBSTAHLSCHUTZ VON MASCHINENLERNMODULEN SOWIE SCHUTZSYSTEM**

(57) Erfindungsgemäß wird zum Diebstahlschutz eines Maschinenlernmoduls (NN), das anhand von Trainingsdaten (TD) darauf trainiert ist, aus Betriebssignalen (BS) einer Maschine (M) Steuersignale zum Steuern der Maschine (M) abzuleiten, eine Verteilung der Trainingsdaten (TD) in einem Darstellungsraum der Betriebssignale (BS) in räumlicher Auflösung ermittelt. Weiterhin wird das Maschinenlernmodul (NN) um eine zusätzliche Eingabeschicht (IL') erweitert, und das erweiterte Maschinenlernmodul (NN) wird zu einem Anwender übermittelt. Bei einer Einspeisung von Eingabesignalen (BS, SS) in das erweiterte Maschinenlernmodul (NN) wird dann durch die zusätzliche Eingabeschicht (IL') ein Ort eines jeweiligen Eingabesignals (BS, SS) im Darstellungsraum ermittelt. Darüber hinaus wird abhängig von der Verteilung der Trainingsdaten (TD) jeweils ein eine Abdeckung des Orts des jeweiligen Eingabesignals (BS, SS) durch die Trainingsdaten (TD) spezifizierender Abdeckungswert ermittelt. Schließlich wird abhängig von den ermittelten Abdeckungswerten, insbesondere bei geringen Abdeckungswerten ein Alarmsignal (A) ausgegeben.

FIG 2

**Beschreibung**

Komplexe Maschinen, wie z.B. Roboter, Motoren, Fertigungsanlagen, Werkzeugmaschinen, Gasturbinen, Windturbinen oder Kraftfahrzeuge benötigen für einen produktiven und stabilen Betrieb in der Regel komplexe Steuerungs- und Überwachungsverfahren. Zu diesem Zweck werden in zeitgemäßen Maschinensteuerungen häufig Techniken des maschinellen Lernens eingesetzt. So kann z.B. ein neuronales Netz als Steuermodell darauf trainiert werden, eine Maschine in optimierter Weise zu steuern.

Ein Training von neuronalen Netzen oder anderen Maschinenlernmodulen zum Steuern von komplexen Maschinen erweist sich indessen häufig als sehr aufwendig. So werden in der Regel große Mengen von Trainingsdaten, erhebliche Rechenressourcen sowie viel spezifisches Expertenwissen benötigt. Mithin besteht ein großes Interesse daran, trainierte Maschinenlernmodule oder eine darin enthaltene Trainingsinformation gegen eine unkontrollierte oder unberechtigte Verbreitung oder Verwendung zu schützen und/oder Diebstähle zu erkennen.

Es ist bekannt, zur Diebstahlerkennung von neuronalen Netzen deren neuronale Gewichte mit einem eindeutigen digitalen Wasserzeichen zu versehen, bevor sie in Verkehr gebracht werden. Anhand des Wasserzeichens kann dann ein vorliegendes neuronales Netz daraufhin geprüft werden, ob es vom Verwender des Wasserzeichens stammt. Derartige Verfahren bieten allerdings nur wenig Schutz gegen eine sogenannte Modellextraktion, bei der ein ggf. markiertes neuronales Netz dazu verwendet wird, ein neues Maschinenlernmodul darauf zu trainieren, sich ähnlich wie das neuronale Netz zu verhalten. Ein neuronalen Gewichten aufgeprägtes Wasserzeichen ist hierbei im neu trainierten Maschinenlernmodul in der Regel nicht mehr sicher nachweisbar.

Im Internet-Dokument https://www.internet-sicherheit.de/research/cybersicherheit-und-kuenstlicheintelligenz/model-extraction-attack.html (abgerufen am 16.12. 2021) werden mehrere Verfahren zum Schutz vor Modellextraktion sowie deren Probleme diskutiert.

Es ist Aufgabe der vorliegenden Erfindung, ein Verfahren zum Diebstahlschutz eines Maschinenlernmoduls sowie ein entsprechendes Schutzsystem anzugeben, die einen besseren Schutz vor Modelextraktion bieten.

Gelöst wird diese Aufgabe durch ein Verfahren mit den Merkmalen des Patentanspruchs 1, durch ein Schutzsystem mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruches 12.

Erfindungsgemäß wird zum Diebstahlschutz eines Maschinenlernmoduls, das anhand von Trainingsdaten darauf trainiert ist, aus Betriebssignalen einer Maschine Steuersignale zum Steuern der Maschine abzuleiten, eine Verteilung der Trainingsdaten in einem Darstellungsraum der Betriebssignale in räumlicher Auflösung ermittelt. Weiterhin wird das Maschinenlernmodul um eine zusätzliche Eingabeschicht erweitert, und das erweiterte Maschinenlernmodul wird zu einem Anwender übermittelt. Bei einer Einspeisung von Eingabesignalen in das erweiterte Maschinenlernmodul wird dann durch die zusätzliche Eingabeschicht ein Ort eines jeweiligen Eingabesignals im Darstellungsraum ermittelt. Darüber hinaus wird abhängig von der Verteilung der Trainingsdaten jeweils ein eine Abdeckung des Orts des jeweiligen Eingabesignals durch die Trainingsdaten spezifizierender Abdeckungswert ermittelt. Schließlich wird abhängig von den ermittelten Abdeckungswerten, insbesondere bei geringen Abdeckungswerten ein Alarmsignal ausgegeben.

Zur Durchführung des erfindungsgemäßen Verfahrens sind ein Schutzsystem, ein Computerprogrammprodukt sowie ein computerlesbares, vorzugsweise nichtflüchtiges Speichermedium vorgesehen.

Das erfindungsgemäße Verfahren sowie das erfindungsgemäße Schutzsystem können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Die Erfindung bietet in vielen Fällen einen effizienten und verhältnismäßig sicheren Schutz von Maschinenlernmodulen gegen eine unberechtigte Modellextraktion. Das Verfahren basiert auf der Beobachtung, dass beim Versuch einer Modellextraktion in der Regel ein Darstellungsraum der Eingabesignale des Maschinenlernmoduls systematisch und/oder zufallsbasiert abgetastet wird. Die solcherart abtastenden Eingabesignale weisen aber in der Regel eine andere statistische Verteilung auf als die zum Training benutzten Betriebssignale der Maschine. Damit kann eine zu geringe Abdeckung von Eingabesignalen durch Trainingsdaten als Hinweis auf eine Modellextraktion gewertet werden. Darüber hinaus ist die Erfindung flexibel anwendbar und insbesondere nicht auf künstliche neuronale Netze beschränkt.

Vorteilhafte Ausführungsformen und Weiterbildungen der Erfindung sind in den abhängigen Ansprüchen angegeben.

Nach einer vorteilhaften Ausführungsform der Erfindung kann die Verteilung der Trainingsdaten als räumlich aufgelöstes Dichtefeld in der zusätzlichen Eingabeschicht gespeichert werden. Als jeweiliger Abdeckungswert kann dann ein Dichtewert des Dichtefelds am Ort des jeweiligen Eingabesignals ermittelt werden. Bereiche mit hohen Dichtewerten können hierbei als gut von den Trainingsdaten abgedeckte Regionen des Darstellungsraums aufgefasst werden. Ein Dichtefeld kann dabei insbesondere eine Dichte der Trainingsdaten als Funktion oder in Abhängigkeit von Koordinaten des Darstellungsraums darstellen.

Gemäß einer weiteren vorteilhaften Ausführungsform der Erfindung kann anhand der Verteilung der Trainingsdaten eine Konfidenzregion im Darstellungsraum ermittelt werden, die einen vorgegebenen Anteil der Trainingsdaten umfasst. Die Konfidenzregion kann in der zusätzlichen Eingabeschicht gespeichert werden. Der jeweilige Abdeckungswert kann dann abhängig von einem Abstand des Orts des jeweiligen Eingabesignals von der Konfidenzregion ermittelt werden. Steigenden Abständen können dabei kleinere Abdeckungswerte, insbesondere durch eine monoton fallende Funktion, beispielsweise durch die Kehrwertfunktion, zugeordnet werden. Weiterhin kann ein maximaler Abdeckungswert, z.B. ein Wert von 1 ermittelt werden, wenn ein Ort eines jeweiligen Eingabesignals innerhalb der Konfidenzregion liegt. Außerhalb der Konfidenzregion kann dann ein mit dem Abstand fallender Abdeckungswert oder ein Abdeckungswert von 0 zugeordnet werden.

Die Konfidenzregion kann insbesondere anhand des Dichtefelds ermittelt werden. Damit kann die Konfidenzregion auch als derjenige Teil des Darstellungsraums ermittelt werden, dessen Trainingsdatendichte oberhalb eines vorgegebenen Schwellwerts liegt. Die Konfidenzregion oder Teile davon können vorzugsweise durch ein jeweiliges Zentrum und einen jeweiligen Umriss oder Radius dargestellt und in dieser Darstellung gespeichert werden. Als Abstand kann insbesondere ein Abstand des Orts des jeweiligen Eingabesignals von einem Zentrum oder von einem Rand der Konfidenzregion ermittelt werden.

Gemäß einer weiteren vorteilhaften Ausführungsform der Erfindung kann die Verteilung der Trainingsdaten durch einen Dichteschätzer ermittelt werden. Derartige Dichteschätzer stehen in vielen Implementierungen zur Verfügung.

Insbesondere können durch den Dichteschätzer die Trainingsdaten mittels einer Clusteranalyse in Cluster gruppiert und für die Cluster jeweils ein Clusterzentrum ermittelt werden. Für ein jeweiliges Clusterzentrum kann dann eine Verteilung der Trainingsdaten des betreffenden Clusters im Darstellungsraum durch Parametrisierung einer vorgegebenen Dichtefunktion dargestellt werden. Zur Clusteranalyse kann der Dichteschätzer insbesondere durch Verfahren des unüberwachten maschinellen Lernens, z.B. durch sogenannte k-Means-Verfahren trainiert werden. Die Dichtefunktion kann durch das betreffende Clusterzentrum sowie eine Streuung der zum betreffenden Cluster gehörigen Trainingsdaten parametrisiert werden. Im mehrdimensionalen Fall kann die Streuung durch eine Kovarianzmatrix dargestellt werden. Ein im Darstellungsraum definiertes Dichtefeld kann vorzugsweise durch eine gegebenenfalls gewichtete Summe der clusterspezifischen Dichtefunktionen dargestellt werden.

Als Dichtefunktion kann insbesondere eine radialsymmetrische Verteilungsfunktion verwendet werden. Beispielsweise eine durch einen Mittelwert MY und eine Streuung S parametrisierte Gauß-Funktion

$$F(X) = N * \exp(-1/2*(X-MY)^2/S^2),$$

wobei X ein Koordinatenvektor des Darstellungsraums, exp() die bekannte Exponentialfunktion und N ein Normierungsfaktor sind. Insofern in eine solche Gauß-Funktion nur wenige Parameter eingehen, können diese in der Regel schnell ermittelt werden.

Alternativ oder zusätzlich kann als Dichtefunktion ein sogenanntes Gaußsches Mischmodell verwendet werden. Beispielsweise eine durch einen Mittelwert MY und eine Kovarianzmatrix $\Sigma$ parametrisierte Gauß-Funktion

$$F(X) = N * \exp(-1/2*(X-MY)^T * \Sigma^{-1} *(X-MY)),$$

wobei X einen Koordinatenvektor des Darstellungsraums, N einen Normierungsfaktor und das hochgestellte T eine Vektortransposition bezeichnen. Ein Gaußsches Mischmodell wird häufig auch als "Gaussian Mixture Model" oder abgekürzt GMM bezeichnet. Gegenüber radialsymmetrischen Dichtefunktionen sind Gaußsche Mischmodelle insofern vorteilhaft, als sie auch eine gute Modellierung nicht kreisförmiger Cluster erlauben. Die Kovarianzmatrix $\Sigma$ kann für einen jeweiligen Cluster vorzugsweise durch ein sogenanntes Erwartungs-Maximierungs-Verfahren maschinell gelernt werden.

Nach einer weiteren Ausführungsform der Erfindung kann anhand der Verteilung der Trainingsdaten eine erste Konfidenzregion im Darstellungsraum ermittelt werden, die einen vorgegebenen Anteil der Trainingsdaten umfasst. Weiterhin kann anhand einer Verteilung der Eingabesignale im Darstellungsraum eine zweite Konfidenzregion ermittelt werden, die einen vorgegebenen Anteil der Eingabesignale umfasst. Damit kann eine Abweichung der zweiten Konfidenzregion von der ersten Konfidenzregion ermittelt werden, und das Alarmsignal kann abhängig von der ermittelten Abweichung ausgegeben werden. Die Abweichung kann insbesondere anhand eines Abstands, z.B. eines euklidischen Abstands oder anhand eines Überlappungsgrades der ersten und zweiten Konfidenzregion ermittelt werden. Darüber hinaus kann die Abweichung anhand einer Berechnung einer sogenannten Kullback-Leibler-Divergenz ermittelt werden. Alternativ oder zusätzlich können zur Ermittlung der Abweichung einerseits Eingabesignale aus der ersten Konfidenzregion und andererseits Eingabesignale aus der zweiten Konfidenzregion in das Maschinenlernmodul eingespeist werden und die jeweiligen Ausgabesignale verglichen werden.

Nach einer weiteren vorteilhaften Ausführungsform der Erfindung kann das Maschinenlernmodul und die zusätzliche Eingabeschicht in einem Softwarecontainer, insbesondere in einem schlüssel- oder signaturgeschützten Softwarecontainer gekapselt werden. Der Softwarecontainer kann vorzugsweise so ausgestaltet sein, dass das Maschinenlernmodul oder die zusätzliche Eingabeschicht bei einer Auftrennung des Softwarecontainers ihre Funktion verlieren.

Ein Ausführungsbeispiel der Erfindung wird nachfolgend anhand der Zeichnung näher erläutert. Dabei veranschaulichen jeweils in schematischer Darstellung

Figur 1    eine Steuerung einer Maschine mittels eines Maschinenlernmoduls,

Figur 2    ein erfindungsgemäßes Schutzsystem für ein Maschinenlernmodul,

Figur 3    eine Konfidenzregion in einem Darstellungsraum von Betriebssignalen und

Figur 4    einen Betrieb eines erfindungsgemäß geschützten Maschinelernmoduls.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

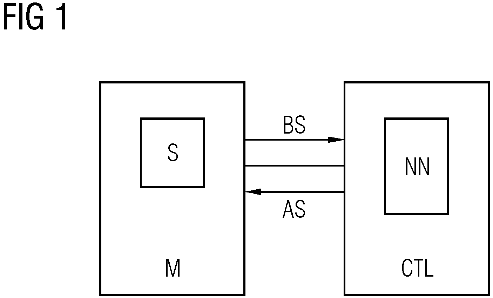

Figur 1 veranschaulicht eine Steuerung einer Maschine M mittels eines trainierten Maschinenlernmoduls NN in schematischer Darstellung. Die Maschine M kann hierbei insbesondere ein Roboter, ein Motor, eine Fertigungsanlage, eine Werkzeugmaschine, eine Turbine, eine Verbrennungskraftmaschine und/oder ein Kraftfahrzeug sein oder eine solche Maschine umfassen. Für das vorliegende Ausführungsbeispiel sei angenommen, dass die Maschine M ein Fertigungsroboter ist.

Die Maschine M wird durch eine an diese gekoppelte Maschinensteuerung CTL gesteuert. Letztere ist in Figur 1 extern zur Maschine M dargestellt. Alternativ dazu kann die Maschinensteuerung CTL auch ganz oder teilweise in die Maschine M integriert sein.

Die Maschine M weist eine Sensorik S auf, durch die fortlaufend Betriebsparameter der Maschine M sowie andere Messwerte gemessen werden. Die von der Sensorik S ermittelten Messwerte werden zusammen mit anderen Betriebsdaten der Maschine M in Form von Betriebssignalen BS von der Maschine M zur Maschinensteuerung CTL übermittelt.

Die Betriebssignale BS umfassen insbesondere Sensordaten und/oder Messwerte der Sensorik S, Steuersignale der Maschine M und/oder Zustandssignale der Maschine M. Die Zustandssignale spezifizieren hierbei jeweils einen Betriebszustand der Maschine M oder von einer oder mehreren ihrer Komponenten, vorzugsweise im Zeitverlauf.

Insbesondere können durch die Betriebssignale BS eine Leistung, eine Drehzahl, ein Drehmoment, eine Bewegungsgeschwindigkeit, eine ausgeübte oder einwirkende Kraft, eine Temperatur, ein Druck, ein aktueller Ressourcenverbrauch, vorhandene Ressourcen, ein Schadstoffausstoß, Vibrationen, ein Verschleiß und/oder eine Belastung der Maschine M oder von Komponenten der Maschine M quantifiziert werden. Vorzugsweise werden die Betriebssignale BS jeweils durch einen oder mehrere numerische Datenvektoren dargestellt und in dieser Form zur Maschinensteuerung CTL übermittelt.

Die Maschinensteuerung CTL verfügt weiter über ein trainiertes Maschinenlernmodul NN zum Steuern der Maschine M. Das Maschinenlernmodul NN ist darauf trainiert, anhand eines eingespeisten Eingabesignals ein Ausgabesignal auszugeben, mittels dessen die Maschine M in optimierter Weise gesteuert werden kann. Zum Training eines solchen Maschinenlernmoduls NN steht eine Vielzahl effizienter Verfahren des maschinellen Lernens zur Verfügung, insbesondere Verfahren des bestärkenden Lernens, das häufig auch als Reinforcement-Learning bezeichnet wird. Auf das Training des Maschinenlernmoduls NN wird unten noch näher eingegangen. Das Maschinenlernmodul NN kann insbesondere als künstliches neuronales Netz implementiert werden. Zum Steuern der Maschine M werden aus den Betriebssignalen BS mittels des trainierten Maschinenlernmoduls NN Ausgabesignale AS, vorzugsweise in Form von numerischen Datenvektoren abgeleitet. Die Ausgabesignale AS oder daraus abgeleitete Signale werden dann als Steuersignale zur Maschine M übermittelt, um diese in optimierter Weise zu steuern.

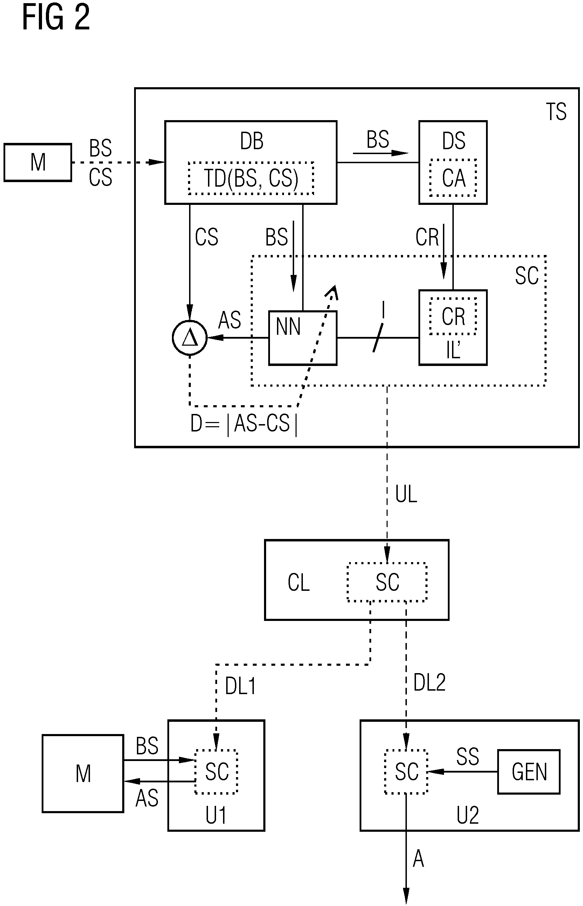

Figur 2 veranschaulicht ein erfindungsgemäßes Schutzsystem für ein Maschinenlernmodul NN zum Steuern der Maschine M. Das Maschinenlernmodul NN, z.B. ein künstliches neuronales Netz, wird in einem Trainingssystem TS darauf trainiert, ein Ausgabesignal AS auszugeben, mittels dessen die Maschine M in optimierter Weise gesteuert werden kann. Das Training wird anhand einer großen Menge von Trainingsdaten TD ausgeführt, die einer Datenbank DB entnommen werden.

Im vorliegenden Ausführungsbeispiel enthalten die Trainingsdaten TD Paare aus jeweils einem Betriebssignal BS der Maschine M und einem zugeordneten Steuersignal CS der Maschine M, die vorzugsweise jeweils durch numerische Datenvektoren dargestellt werden. Ein jeweiliges Steuersignal CS stellt dabei dasjenige Steuersignal dar, durch das die Maschine M bei Vorliegen des zugeordneten Betriebssignals BS in optimierter Weise gesteuert wird. Die Trainingsdaten TD können beispielsweise aus einem Betrieb der Maschine M, einem Betrieb einer dazu ähnlichen Maschine oder aus einer Simulation der Maschine M ermittelt werden.

Unter einem Training sei hierbei allgemein eine Optimierung einer Abbildung eines Eingabesignals eines Maschinenlernmoduls auf dessen Ausgabesignal verstanden. Diese Abbildung wird nach vorgegebenen gelernten und/oder zu lernenden Kriterien während einer Trainingsphase optimiert. Als Kriterium können insbesondere bei Steuermodellen ein Erfolg einer Steueraktion oder bei Prädiktionsmodellen ein Prädiktionsfehler herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden.

Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren. Trainieren lassen sich insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, k-nächste-Nachbarn-Klassifikatoren, physikalische Modelle und/oder Entscheidungsbäume.

Zum Training des Maschinenlernmoduls NN werden die in den Trainingsdaten TD enthaltenen Betriebssignale BS dem Maschinenlernmodul NN als Eingabesignale zugeführt. Im Zuge des Trainings werden neuronale Gewichte oder andere Parameter des Maschinenlernmoduls NN vorzugsweise durch eines der oben erwähnten Optimierungsverfahren derart eingestellt, dass die Maschine M mittels der vom Maschinenlernmodul NN aus den Eingabesignalen BS abgeleiteten Ausgabesignale AS in optimierter Weise gesteuert wird. Zu diesem Zweck werden im vorliegenden Ausführungsbeispiel die Ausgabesignale AS mit den zugehörigen, in den Trainingsdaten TD enthaltenen Steuersignalen CS verglichen und ein jeweiliger Abstand D zwischen diesen Signalen ermittelt. Als Abstand D kann beispielsweise ein euklidischer Abstand zwischen den darstellenden Datenvektoren oder eine andere Norm von deren Differenz ermittelt werden, z.B. gemäß $D = |AS - CS|$.

Die so ermittelten Abstände D werden, wie in Figur 2 durch einen punktierten Pfeil angedeutet, zum Maschinenlernmodul NN zurückgeführt. Dessen neuronale Gewichte werden dann so eingestellt, dass der Abstand D zumindest im statistischen Mittel minimiert wird.

Alternativ oder zusätzlich kann zum Training des Maschinenlernmoduls NN auch ein Verfahren des bestärkenden Lernens verwendet werden. Hierbei kann die Maschine M oder eine Simulation der Maschine M durch die Ausgabesignale AS gesteuert werden, wobei fortlaufend eine Performanz der Maschine M gemessen oder anderweitig ermittelt wird. Als Performanz können z.B. eine Leistung, ein Wirkungsgrad, ein Durchsatz, eine Ausführungsgeschwindigkeit oder andere für den Betrieb der Maschine M relevante Parameter ermittelt werden. Die neuronalen Gewichte des Maschinenlernmoduls NN werden dann so eingestellt, dass die Performanz optimiert wird.

Weiterhin werden die in den Trainingsdaten TD enthaltenen Betriebssignale BS in einen Dichteschätzer DS des Trainingssystems TS eingespeist. Der Dichteschätzer DS dient zum Ermitteln einer statistischen Verteilung der eingespeisten Betriebssignale BS - und damit der Trainingsdaten TD - in einem Darstellungsraum der Betriebssignale BS.

Der Darstellungsraum ist vorzugsweise ein Vektorraum der die Betriebssignale BS darstellenden Datenvektoren und in der Regel hochdimensional. Die statistische Verteilung wird durch den Dichteschätzer DS in hinsichtlich des Vektorraums räumlich aufgelöster Form ermittelt.

Anhand der ermittelten Verteilung soll bei einer späteren Verwendung des Maschinenlernmoduls NN geprüft werden, ob die dem Maschinenlernmodul NN zugeführten Eingabesignale eine ähnliche Verteilung wie die Betriebssignale BS der Trainingsdaten TD aufweisen. Eine ähnliche Verteilung spricht für einen bestimmungsgemäßen Betrieb des Maschinenlernmoduls NN zum Steuern der Maschine M. Dagegen ist eine signifikante Abweichung von der Verteilung der Trainingsdaten TD ein Hinweis auf eine systematische oder zufallsgesteuerte Abtastung des Darstellungsraums und damit ein Indiz für den Versuch einer Modellextraktion.

Zur Ermittlung der Verteilung der Betriebssignale BS bzw. der Trainingsdaten TD führt der Dichteschätzer DS eine Clusteranalyse CA durch. Hierbei werden die Betriebssignale BS bzw. die Trainingsdaten TD in verschiedene Cluster gruppiert, wobei für einen jeweiligen Cluster jeweils ein Clusterzentrum ermittelt wird. Zur Clusteranalyse kann der Dichteschätzer DS insbesondere durch Verfahren des unüberwachten maschinellen Lernens, z.B. durch ein sogenanntes k-Means-Verfahren trainiert werden.

Für ein jeweiliges Clusterzentrum kann dann eine Verteilung der Betriebssignale bzw. Trainingsdaten des betreffenden Clusters im Darstellungsraum durch Parametrisierung einer vorgegebenen Dichtefunktion F dargestellt werden. Die clusterspezifische Dichtefunktion F wird in Anpassung an die Verteilung der Betriebssignale bzw. Trainingsdaten durch das betreffende Clusterzentrum sowie durch eine Streuung der zum betreffenden Cluster gehörigen Betriebssignale bzw. Trainingsdaten parametrisiert.

Im vorliegenden Ausführungsbeispiel wird als Dichtefunktion F ein sogenanntes Gaußsches Mischmodell verwendet. Letzteres erlaubt es, auch nicht kreisförmige Verteilungen oder Streuungen um Clusterzentren gut zu modellieren. Eine derartige, nicht kreisförmige Streuung wird hierbei durch ein sogenannte Kovarianzmatrix dargestellt.

Als clusterspezifische Dichtefunktion F gemäß dem Gaußschen Mischmodell kann insbesondere eine durch einen Mittelwert MY und eine Kovarianzmatrix $\Sigma$ parametrisierte Gauß-Funktion

$$F(X) = N * \exp(-1/2*(X-MY)^T * \Sigma^{-1} * (X-MY))$$

verwendet werden, wobei X einen Koordinatenvektor des Darstellungsraums, N einen Normierungsfaktor und das hochgestellte T eine Vektortransposition bezeichnen. Die Kovarianzmatrix $\Sigma$ kann für einen jeweiligen Cluster vorzugsweise durch ein sogenanntes Erwartungs-Maximierungs-Verfahren maschinell gelernt werden.

Durch eine gegebenenfalls gewichtete Addition der Dichtefunktionen F der verschiedenen Cluster kann ein im Darstellungsraum definiertes Dichtefeld dargestellt werden. Ein solches Dichtefeld repräsentiert eine Dichte und damit eine Verteilung der Betriebssingale BS bzw. der Trainingsdaten TD als Funktion des Orts im Darstellungsraum.

Anhand des Dichtefeldes wird durch den Dichteschätzer DS eine Konfidenzregion CR im Darstellungsraum ermittelt. Die Konfidenzregion CR wird so ermittelt, dass sie einen vorgegebenen Anteil von z.B. 90%, 95% oder 99% der Betriebssignale BS bzw. der Trainingsdaten TD umfasst.

Alternativ oder zusätzlich kann als Konfidenzregion CR derjenige Teil des Darstellungsraums ermittelt werden, in dem das Dichtefeld einen Wert oberhalb eines vorgegebenen Dichteschwellwerts hat. Die Konfidenzregion CR kann z.B. durch ein oder mehrere Zentren zusammen mit einem jeweiligen Radius und/oder durch einen geometrischen Umriss dargestellt und gespeichert werden.

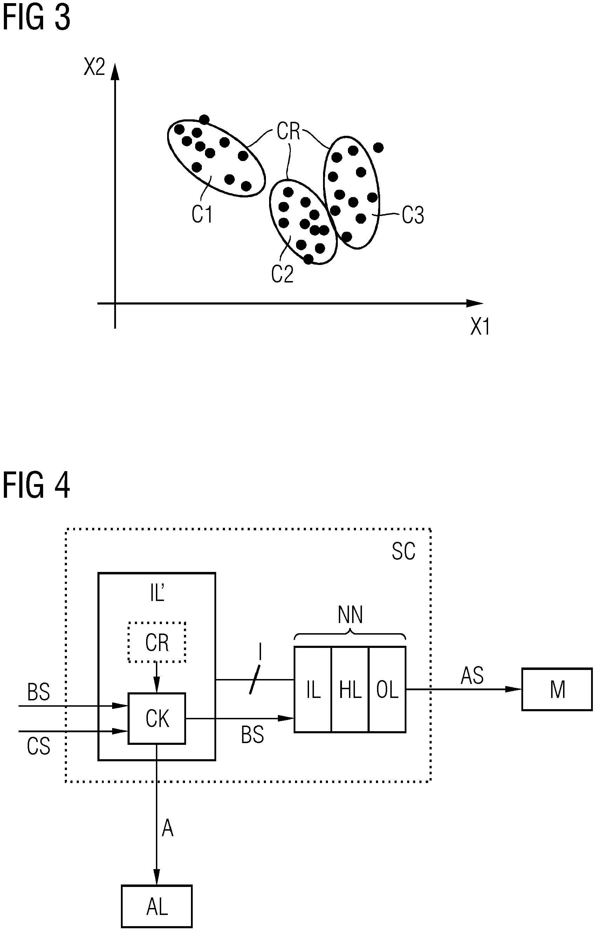

Figur 3 veranschaulicht eine derartige Konfidenzregion CR in einem durch Koordinaten X1 und X2 aufgespannten Darstellungsraum von Betriebssignalen. Die jeweiligen Betriebssignale sind hierbei ohne Bezugszeichen durch kleine ausgefüllte Kreise dargestellt. Durch die Clusteranalyse werden die Betriebssignale in drei verschiedene Cluster C1, C2 und C3 gruppiert. Für jeden der Cluster C1, C2 und C3 wird die Verteilung der zum jeweiligen Cluster C1, C2 bzw. C3 gehörigen Betriebssignale durch eine clusterspezifische Dichtefunktion F modelliert. Durch die Verwendung eines Gaußschen Mischmodells können auch nicht kreisförmige, hier ellipsoidförmige Verteilungen modelliert werden. Anhand der modellierenden Dichtefunktionen F wird eine Konfidenzregion CR als Vereinigung ellipsoidförmiger Bereiche des Darstellungsraums ermittelt, die nahezu alle Betriebssignale enthält.

Wie Figur 2 weiter veranschaulicht, wird die ermittelte Konfidenzregion CR in einer zusätzlichen Eingabeschicht IL' für das Maschinenlernmodul NN gespeichert. Die zusätzliche Eingabeschicht IL' kann als neuronale Schicht, als Softwareschicht, als Eingaberoutine für das trainierte Maschinenlernmodul NN und/oder als Aufrufroutine für eine Ausführung des trainierten Maschinenlernmoduls NN ausgebildet sein.

Die zusätzliche Eingabeschicht IL' wird durch das Trainingssystem TS dem trainierten Maschinenlernmodul NN hinzugefügt und ist mit diesem über eine Schnittstelle I gekoppelt. Um die Schnittstelle I gegen unberechtigten Zugriff zu schützen, wird das trainierte Maschinenlernmodul NN zusammen mit der zusätzlichen Eingabeschicht IL' durch das Trainingssystem TS in einem Softwarecontainer SC vorzugsweise schlüssel- und/oder signaturgeschützt gekapselt. Die Schnittstelle I kann hierbei z.B. durch Verschlüsselung oder Obfuskation geschützt werden. Der Softwarecontainer SC ist vorzugsweise so ausgestaltet, dass das Maschinenlernmodul NN und/oder die zusätzliche Eingabeschicht IL' bei einer Auftrennung des Softwarecontainers SC ihre Funktionen verlieren.

Der so geschützte Softwarecontainer SC kann dann an Anwender weitergegeben werden. Zu diesem Zweck wird der Softwarecontainer SC vom Trainingssystem TS durch einen Upload UL in eine Cloud CL, insbesondere in einen App-Store der Cloud CL übertragen.

Aus der Cloud CL oder ihrem App-Store wird der Softwarecontainer SC einerseits durch einen ersten Download DL1 zu einem System U1 eines ersten Anwenders und andererseits durch einen zweiten Download DL2 zu einem System U2 eines zweiten Anwenders heruntergeladen.

Für das vorliegende Ausführungsbeispiel sei angenommen, dass der erste Anwender mit Hilfe des geschützten Maschinenlernmoduls NN auf seinem System U1 die Maschine M bestimmungsgemäß steuern möchte. Demgegenüber möchte der zweite Anwender auf seinem System U2 an dem trainierten Maschinenlernmodul NN eine unberechtigte Modellextraktion vornehmen.

Durch das System U1 werden zur Steuerung der Maschine M aktuelle Betriebssignale BS der Maschine empfangen und in den Softwarecontainer SC eingespeist. Im Softwarecontainer SC wird durch die zusätzliche Eingabeschicht IL' geprüft, ob die Eingabesignale BS durch die in den Trainingsdaten TD enthaltenen Betriebssignale hinreichend abgedeckt sind. Ein Ablauf der Prüfung wird unten näher erläutert.

Insofern im vorliegenden Ausführungsbeispiel die Betriebssignale BS wie die Trainingsdaten TD von der Maschine M stammen, ist zu erwarten, dass die Betriebssignale BS und die Trainingsdaten TD eine ähnliche Verteilung im Darstellungsraum aufweisen. Dementsprechend werden die Betriebssignale BS durch die zusätzliche Eingabeschicht IL' als hinreichend abgedeckt bewertet, was für einen bestimmungsgemäßen Normalbetrieb des trainierten Maschinenlernmoduls NN spricht. Infolgedessen kann die Maschine M durch Ausgabesignale AS des trainierten Maschinenlernmoduls NN wie vom ersten Anwender gewünscht gesteuert werden.

Anders als im Fall des ersten Anwenders werden im System U2 des zweiten Anwenders durch einen Generator GEN synthetische Abtastsignale SS als Eingabesignale für das trainierte Maschinenlernmodul NN generiert, um den Darstellungsraum systematisch abzutasten. Die dem Softwarecontainer SC zugeführten Eingabesignale SS werden, wie oben bereits beschrieben, durch die zusätzliche Eingabeschicht IL' daraufhin geprüft, ob sie durch die Verteilung der Trainingsdaten TD hinreichend abgedeckt sind.

Insofern derartige Abtastsignale SS in der Regel eine andere statistische Verteilung aufweisen als die zum Training benutzten, realen Betriebssignale der Maschine M, kann davon ausgegangen werden, dass ein statistisch signifikanter Anteil der Abtastsignale SS außerhalb der Konfidenzregion CR liegt. Dies wird durch die zusätzliche Eingabeschicht IL' erkannt und als Hinweis auf eine unberechtigte Modellextraktion bewertet. Infolgedessen wird durch die zusätzliche Eingabeschicht IL' ein Alarmsignal A beispielsweise an einen Ersteller des trainierten Maschinenlernmoduls NN übermittelt. Durch das Alarmsignal A kann der Ersteller des trainierten Maschinenlernmoduls NN über den Versuch einer Modellextraktion informiert werden.

Alternativ oder zusätzlich zur Ausgabe des Alarmsignals A können beim Erkennen eines Extraktionsversuchs die Eingabesignale, hier SS, durch die zusätzliche Eingabeschicht IL' so verfälscht werden, dass sich die resultierenden Ausgabesignale des Maschinenlernmoduls NN nicht zum erfolgreichen Training eines neuen Maschinenlernmoduls eignen. Zur Verfälschung können die Eingabesingale vor Weitergabe an das trainierte Maschinenlernmodul NN insbesondere ganz oder teilweise durch Zufallswerte ersetzt werden.

Figur 4 veranschaulicht einen Betrieb eines erfindungsgemäß geschützten Maschinenlernmoduls NN. Letzteres ist, wie oben schon erwähnt, zusammen mit der zusätzlichen Eingabeschicht IL' in einem Softwarecontainer SC gekapselt. Das Maschinenlernmodul NN umfasst eine neuronale Eingabeschicht IL, eine oder mehrere verdeckte neuronale Schichten HL sowie eine neuronale Ausgabeschicht OL. Die zusätzliche Eingabeschichte IL' ist dem Maschinenlernmodul NN vorgeschaltet und mit der Eingabeschicht IL über die Schnittstelle I gekoppelt.

Dem Softwarecontainer SC werden entweder Betriebssignale BS oder Abtastsignale SS als Eingabesignale zugeführt. Wie oben erwähnt, sei hierbei angenommen, dass die Betriebssignale BS im Rahmen einer bestimmungsgemäßen Verwendung des Maschinenlernmoduls NN zugeführt werden, während die Abtastsignale SS im Falle einer versuchten Modellextraktion eingespeist werden.

Anstatt dem Maschinenlernmodul NN als Eingabesignale zugeführt zu werden, werden die Signale BS bzw. SS von der zusätzlichen Eingabeschicht IL' abgefangen und einem Prüfmodul CK der zusätzlichen Eingabeschicht IL' zugeführt. Die zugeführten Eingabesignale BS bzw. SS werden vom Prüfmodul CK dahingehend geprüft, ob sie von den Trainingsdaten TD hinreichend abgedeckt sind. Zu diesem Zweck ermittelt das Prüfmodul CK anhand der in der zusätzlichen Eingabeschicht IL' gespeicherten Konfidenzregion CR, ob ein Ort eines jeweiligen Eingabesignals im Darstellungsraum innerhalb der Konfidenzregion CR liegt oder außerhalb. Falls ein Ort eines jeweiligen Eingabesignals innerhalb der Konfidenzregion CR liegt, wird diesem Betriebssignal ein Abdeckungswert von 1 zugeordnet. Falls der jeweilige Ort außerhalb der Konfidenzregion CR liegt, wird dem betreffenden Betriebssignal ein Wert kleiner als 1 zugeordnet, der zudem mit einem Abstand des jeweiligen Orts von der Konfidenzregion CR z.B. reziprok abfällt.

Für die so ermittelten Abdeckungswerte wird durch das Prüfmodul CK ein Gesamtabdeckungswert für die Eingabesignale BS bzw. SS ermittelt, der eine Gesamtabdeckung der Eingabesignale BS bzw. SS durch die Trainingsdaten TD quantifiziert. Als Gesamtabdeckungswert kann beispielsweise eine gegebenenfalls gewichtete Summe der einzelnen Abdeckungswerte und/oder ein mittlerer Abdeckungswert ermittelt werden.

Der ermittelte Gesamtabdeckungswert wird durch die zusätzliche Eingabeschicht IL' mit einem vorgegebenen Abdeckungsschwellwert verglichen. Ein Unterschreiten des Abdeckungsschwellwerts wird dabei als Hinweis auf eine unberechtigte Modellextraktion gewertet. Andernfalls wird ein bestimmungsgemäßer Normalbetrieb diagnostiziert.

Wie oben bereits erwähnt, ist zu erwarten, dass bei Einspeisung von Betriebssignalen BS der Maschine M eine hohe Abdeckung durch die Trainingsdaten TD vorliegt und deshalb durch die zusätzliche Eingabeschicht IL' ein Normalbetrieb erkannt wird. In diesem Fall werden die Eingabesignale BS von der zusätzlichen Eingabeschicht IL' in die Eingabeschicht IL des Maschinenlernmoduls NN eingespeist und ein resultierendes Ausgabesignal AS des Maschinenlernmoduls NN zum Steuern der Maschine M ausgegeben.

Im Unterschied dazu kann bei Einspeisung der Abtastsignale SS davon ausgegangen werden, dass diese in vielen Fällen außerhalb der Konfidenzregion CR liegen und deshalb, wie oben ausgeführt, durch die zusätzliche Eingabeschicht IL' als Versuch einer Modellextraktion bewertet werden. In diesem Fall wird durch das Prüfmodul CK ein Alarmsignal A beispielsweise an einen Alarmgeber AL eines Erstellers des trainierten Maschinenlernmoduls NN ausgegeben.

Parallel dazu werden durch das Prüfmodul CK die als Eingabesignale vorgesehenen Abtastsignale SS verfälscht und/oder ganz oder teilweise durch Zufallssignale ersetzt und in dieser Form in die Eingabeschicht IL des Maschinenlernmoduls NN eingespeist. Durch die Verfälschung der Eingabesignale kann eine Modellextraktion anhand des trainierten Maschinenlernmoduls NN effektiv verhindert werden.

**Patentansprüche**

1. Computerimplementiertes Verfahren zum Diebstahlschutz eines Maschinenlernmoduls (NN), das anhand von Trainingsdaten (TD) darauf trainiert ist, aus Betriebssignalen (BS) einer Maschine (M) Steuersignale zum Steuern der Maschine (M) abzuleiten, wobei

   a) eine Verteilung der Trainingsdaten (TD) in einem Darstellungsraum der Betriebssignale (BS) in räumlicher Auflösung ermittelt wird,
   b) das Maschinenlernmodul (NN) um eine zusätzliche Eingabeschicht (IL') erweitert wird,
   c) das erweiterte Maschinenlernmodul (NN) zu einem Anwender übermittelt wird,
   d) bei einer Einspeisung von Eingabesignalen (BS, SS) in das erweiterte Maschinenlernmodul (NN) ein Ort eines jeweiligen Eingabesignals (BS, SS) im Darstellungsraum durch die zusätzliche Eingabeschicht (IL') ermittelt wird,
   e) abhängig von der Verteilung der Trainingsdaten (TD) jeweils ein eine Abdeckung des Orts des jeweiligen Eingabesignals (BS, SS) durch die Trainingsdaten (TD) spezifizierender Abdeckungswert ermittelt wird, und
   f) abhängig von den ermittelten Abdeckungswerten ein Alarmsignal (A) ausgegeben wird.

2. Verfahren nach Anspruch 1, **dadurch gekennzeichnet,**

   **dass** die Verteilung der Trainingsdaten (TD) als räumlich aufgelöstes Dichtefeld in der zusätzlichen Eingabeschicht (IL') gespeichert wird, und
   **dass** als jeweiliger Abdeckungswert ein Dichtewert des Dichtefelds am Ort des jeweiligen Eingabesignals (BS, SS) ermittelt wird.

3. Verfahren nach einem der vorhergehenden Ansprüche, **dadurch gekennzeichnet,**

   **dass** anhand der Verteilung der Trainingsdaten (TD) eine Konfidenzregion im Darstellungsraum ermittelt wird, die einen vorgegebenen Anteil der Trainingsdaten umfasst,
   **dass** die Konfidenzregion (CR) in der zusätzlichen Eingabeschicht (IL') gespeichert wird, und
   **dass** der jeweilige Abdeckungswert abhängig von einem Abstand des Orts des jeweiligen Eingabesignals (BS, SS) von der Konfidenzregion (CR) ermittelt wird.

4. Verfahren nach einem der vorhergehenden Ansprüche, **dadurch gekennzeichnet,**
   **dass** die Verteilung der Trainingsdaten (TD) durch einen Dichteschätzer (DS) ermittelt wird.

5. Verfahren nach Anspruch 4, **dadurch gekennzeichnet,**
   **dass** durch den Dichteschätzer

   - die Trainingsdaten mittels einer Clusteranalyse (CA) in Cluster (C1, C2, C3) gruppiert werden,
   - für die Cluster (C1, C2, C3) jeweils ein Clusterzentrum ermittelt wird, und
   - für ein jeweiliges Clusterzentrum eine Verteilung der Trainingsdaten (TD) des betreffenden Clusters (C1, C2, C3) im Darstellungsraum durch Parametrisierung einer vorgegebenen Dichtefunktion (F) dargestellt wird.

6. Verfahren nach Anspruch 5, **dadurch gekennzeichnet,**
   **dass** als Dichtefunktion (F) eine radialsymmetrische Verteilungsfunktion verwendet wird.

7. Verfahren nach Anspruch 5 oder 6, **dadurch gekennzeichnet, dass** als Dichtefunktion (F) ein Gaußsches Mischmodell verwendet wird.

8. Verfahren nach einem der vorhergehenden Ansprüche, **dadurch gekennzeichnet,**

   **dass** anhand der Verteilung der Trainingsdaten (TD) eine erste Konfidenzregion (CR) im Darstellungsraum ermittelt wird, die einen vorgegebenen Anteil der Trainingsdaten (TD) umfasst, dass anhand einer Verteilung der Eingabesignale (BS, SS) im Darstellungsraum eine zweite Konfidenzregion ermittelt wird, die einen vorgegebenen Anteil der Eingabesignale (BS, SS) umfasst,
   **dass** eine Abweichung der zweiten Konfidenzregion von der ersten Konfidenzregion (CR) ermittelt wird, und
   **dass** das Alarmsignal (A) abhängig von der ermittelten Abweichung ausgegeben wird.

9. Verfahren nach einem der vorhergehenden Ansprüche, **dadurch gekennzeichnet, dass** das Maschinenlernmodul (NN) und die zusätzliche Eingabeschicht (IL') in einem Softwarecontainer (SC) gekapselt werden.

10. Schutzsystem zum Diebstahlsschutz eines Maschinenlernmoduls (NN), eingerichtet zum Ausführen aller Verfahrensschritte eines Verfahrens nach einem der vorhergehenden Ansprüche.

11. Computerprogrammprodukt eingerichtet zum Ausführen eines Verfahrens nach einem der Ansprüche 1 bis 9.

12. Computerlesbares Speichermedium mit einem Computerprogrammprodukt nach Anspruch 11.

FIG 1

# FIG 2

# FIG 3

# FIG 4

Europäisches
Patentamt

European
Patent Office

Office européen
des brevets

**EUROPÄISCHER RECHERCHENBERICHT**

Nummer der Anmeldung

EP 22 15 1571

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/258783 A1 (MEHTA SAMEEP [IN] ET AL) 22. August 2019 (2019-08-22) <br> * Zusammenfassung; Ansprüche 1-20; Abbildungen 1,2 * <br> * Absatz [0002] – Absatz [0037] * <br> ----- | 1-12 | INV. <br> G06N3/04 <br><br> ADD. <br> G06N3/08 <br> G06N20/00 <br> G06F21/16 |
| A | Yang Jingkang ET AL: "Generalized Out-of-Distribution Detection: A Survey", <br> , <br> 21. Oktober 2021 (2021-10-21), <br> XP055932492, <br> Gefunden im Internet: <br> URL:https://arxiv.org/pdf/2110.11334.pdf <br> [gefunden am 2022-06-17] <br> * das ganze Dokument * <br> ----- | 1-12 | |
| A | BRYANT CHEN ET AL: "Detecting Backdoor Attacks on Deep Neural Networks by Activation Clustering", <br> ARXIV.ORG, CORNELL UNIVERSITY LIBRARY, 201 OLIN LIBRARY CORNELL UNIVERSITY ITHACA, NY 14853, <br> 9. November 2018 (2018-11-09), <br> XP081048058, <br> * das ganze Dokument * <br> ----- | 1-12 | |

RECHERCHIERTE SACHGEBIETE (IPC)

G06N
G06F

Der vorliegende Recherchenbericht wurde für alle Patentansprüche erstellt

| Recherchenort | Abschlußdatum der Recherche | Prüfer |
|---|---|---|
| Den Haag | 20. Juni 2022 | Volkmer, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 1571

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2022

| Im Recherchenbericht angeführtes Patentdokument | Datum der Veröffentlichung | Mitglied(er) der Patentfamilie | Datum der Veröffentlichung |
|---|---|---|---|
| US 2019258783 A1 | 22-08-2019 | KEINE | |

EPO FORM P0461

Für nähere Einzelheiten zu diesem Anhang : siehe Amtsblatt des Europäischen Patentamts, Nr.12/82